# EUROPEAN PATENT SPECIFICATION

(11) **EP 1 040 951 B1**
(45) Date of publication and mention of the grant of the patent: **02.05.2003**
(21) Application number: 00301272.1
(22) Date of filing: 17.02.2000
(51) Int. Cl.: B60J 10/04, B60J 10/06

(54) **Sealing and guiding strips**
Dichtungs- und Führungsprofile
Bandes d'étanchéité et de guidage

(30) Priority: 01.04.1999 GB 9907732
(43) Date of publication of application: 04.10.2000
(73) Proprietor: GenCorp Property Inc., Sacramento, CA 95853-7012 (US)
(72) Inventor: Niemanns, Gerd, 4155 Grefrath 1 (DE)
(74) Representative: Foster, David Martyn

(56) References cited:
- EP-A- 0 441 073
- WO-A-97/12775
- FR-A- 2 689 457
- GB-A- 2 221 238
- US-A- 4 969 293
- PATENT ABSTRACTS OF JAPAN vol. 1998, no. 09, 31 July 1998 (1998-07-31) & JP 10 100158 A (KINUGAWA RUBBER IND CO LTD), 21 April 1998 (1998-04-21)
- PATENT ABSTRACTS OF JAPAN vol. 1998, no. 10, 31 August 1998 (1998-08-31) & JP 10 119583 A (KINUGAWA RUBBER IND CO LTD), 12 May 1998 (1998-05-12)

## Description

The invention relates to a sealing or guiding strip for making sealing or guiding contact with a member movable in a predetermined path, comprising a mounting part for mounting the strip adjacent the said path, a sealing or guiding portion made of flexible material for contacting the said member, and an intermediate portion connecting the sealing or guiding portion to the mounting part.

The invention also relates to a sealing or guiding arrangement for making sealing or guiding contact with a surface of a movable window glass in a motor vehicle body door, comprising a sealing or guiding strip having a mounting part made of extruded plastics or rubber material for mounting the strip to extend along and adjacent to one longitudinally extending edge of a waist line aperture in the door through which the window glass moves, a sealing or guiding portion made of non-cellular plastics or rubber material having a face for making sealing or guiding contact with the surface of the window glass, and an intermediate portion integrally connecting the sealing or guiding portion to the mounting part.

Such a strip and arrangement are shown, for example, in WO-A-97/08004. In the strip and arrangement shown there, the intermediate portion includes a hollow chamber on the outside wall of which is mounted a sealing and guiding portion in such a manner as to reduce "squeaking" noises created when the sealing and guiding portion and the movable member move relative to each other in mutual contact, such as when the movable member is a slidable window glass in a motor vehicle body. The invention is also concerned with this problem.

The invention is defined in the independent claims.

According to the invention, therefore, the sealing and guiding strip as first set forth above is characterised in that the intermediate portion is made of expanded or monocellular material.

The mounting part may comprise channel-shaped flexible material, and the mounting part, the sealing or guiding portion and the intermediate portion may be all integrally formed.

Sealing and guiding strips and arrangements embodying the invention will now be described, by way of example only, with reference to the accompanying diagrammatic drawings in which:
Figure 1 is a side view of a motor vehicle incorporating one of the sealing and guiding strips; and
Figure 2 is a scrap section on the line II-II of Figure 1.

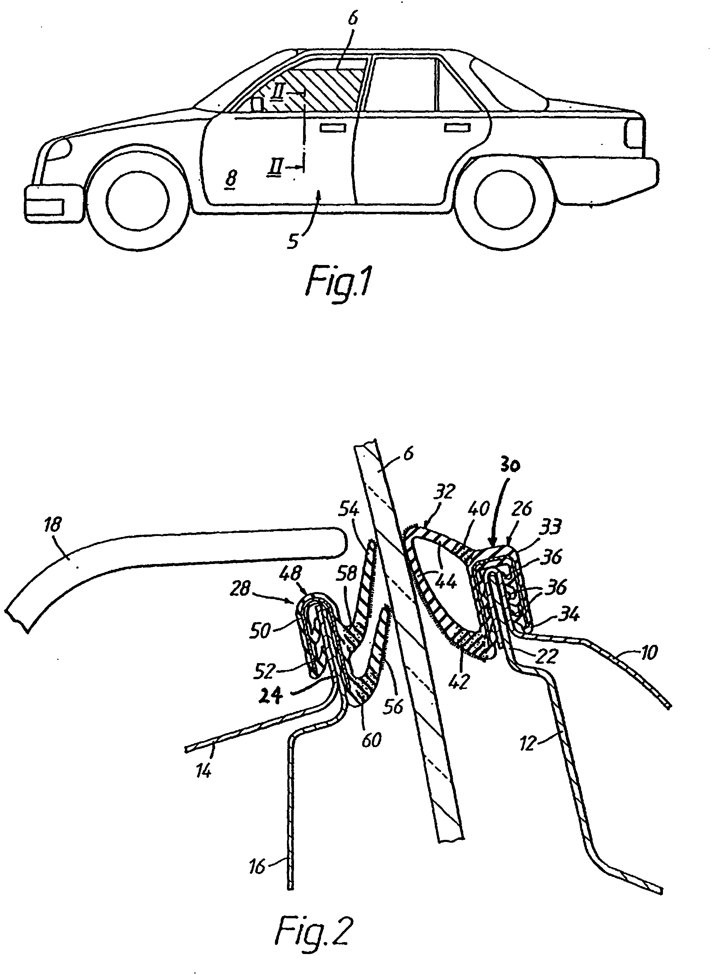

As shown in Figure 1, the motor vehicle has a door 5 with the normal vertically movable window glass 6, the window glass 6 being lowerable into the lower part 8 of the vehicle door and raisable therefrom.

Figure 2 shows a scrap section on the line II-II of Figure 1 taken at the waist line of the vehicle door. Figure 2 shows the outer panels 10 and 12 of the door and the inner panels 14,16 which are overlapped by the inner door trim 18. A gap 20 is thus defined between the door panels 12 and 16 and through which the window glass 6 slides into and from the lower part 8 of the vehicle door.

The door panels 10 and 12 on the outside of the door are joined together, preferably by spot-welding, to provide a flange 22 running along the waist line of the door on the outside of the window glass. Similarly, the inner door panels 14,16 form a corresponding flange 24 running along the waist line on the inside of the door.

A sealing strip 26 is mounted on the flange 22 for sealing against the outside face of the window glass 6.

A sealing strip 28 is mounted on the flange 24 for sealing against the inside face of the window glass.

The sealing strip 26 comprises a channel-shaped gripping or mounting part 30 and a hollow sealing part 32.

The gripping part 30 is made of extruded plastics or rubber material 33 in channel-form and incorporates a metal core or carrier 34. The carrier 34 is also generally channel-shape in cross-section. It may be made of resilient metal and may be in the form of a continuous unapertured channel or a channel provided with apertures to increase its flexibility. For example, it may be in the form of a series of side-by-side U-shaped metal elements integrally connected together by short connecting links. Instead, it could comprise a series of such U-shaped elements entirely disconnected from each other. Wire looped to and fro across the width of the channel could be used instead. However, many other forms of carrier can be used.

Advantageously, the carrier 34 is incorporated into the extruded material by means of a known cross-head extrusion process.

As shown in the Figure, the extruded material 33 incorporates integral lips 36 on one side of the channel. These contact the face of the flange 22 and help to locate the gripping part 30 firmly in position on the flange.

The sealing part 32 is advantageously made of rubber. It may be produced separately and then attached to the outside of the gripping part 30 such as by adhesive. Advantageously, however, and particularly in the case when the extruded material 33 of the gripping part 30 is rubber, it is extruded integrally with the gripping part 30.

In accordance with a feature of the sealing strip being described, the gripping part 32 has portions indicated at 40 and 42 which are made of expanded or monocellular rubber or similar material, these portions attaching the remaining portion 44 of the sealing part 32 to the gripping part 30. The remaining portion 44 is made of non-cellular rubber or similar material and, as shown in Figure 2, makes contact with the outside face of the window glass 6.

The rubber of the part 44 of the sealing part 32 is advantageously relatively soft and flexible to provide good sealing. It may be softer than the channel-shaped extruded material of the gripping part 30.

The outside face of the sealing part 32 is advantageously covered with flock or other low-friction material to assist the sliding movement of the glass 6.

The sealing strip 28 on the inside of the window glass has a gripping or mounting part 48 which is of channel-shape and may be generally constructed in the same manner as the gripping part 30 of the sealing strip 26. As shown, it comprises extruded material 50 in which is embedded a reinforcing carrier 52. It has two gripping lips 36 instead of the three gripping lips of the sealing strip 26 but the number of such gripping lips can be varied as desired.

The sealing strip 28 also includes two sealing lips 54 and 56. Each of these is preferably integrally extruded with the material 50 of the gripping part 48. Each gripping lip incorporates a root region 58,60 which is made of expanded or monocellular rubber or similar material. The remainder of each gripping lip 54,56 is of non-cellular rubber or similar material, preferably relatively soft and, as shown, each lip makes contact with the inside face of the window glass 6. Advantageously, the surfaces of the lips 54 and 56 in contact with the window glass 6 are covered with low-friction material such as flock.

In use, the sealing part 32 and the sealing lips 54,56 make low-friction sealing and guiding contact with the window glass 6 as it is raised and lowered and also prevent water or moisture from entering the lower part 8 of the vehicle door.

The expanded or monocellular rubber portions 40,42,58 and 60 of the two sealing strips 26,28 are found to eliminate or minimise the production of squeaky noise during window closing or opening. Such noise is annoying, particularly in more expensive vehicles in which various steps have been taken to minimise all other noises. Although the exact reason for the reduction in the production of such squeaky noise is not yet fully established, it is believed that the expanded or monocellular portions help to prevent vibration of the sealing part and also block the transmission of noise through the sealing parts to the gripping parts.

The remaining portion 44 of the sealing strip 26, being made of non-cellular material, is sufficiently resilient to maintain its shape and position when the window glass 6 is lowered; if it were to be made of expanded or cellular material like the portions 42 and 44, there would be a tendency for the sealing part 32 to be dragged downwardly, towards the gap 20, as the window glass moves downwardly. For the same reason, the distal parts of the lips 54,56 are made of non-cellular material.

It will be understood that the forms of sealing strip illustrated in Figure 2 are purely by way of example. The sealing strips on both the inside and the outside of the glass could be of the same form if required. The shapes of the sealing parts could be altered as required. There could be more or less than the two sealing lips 54,56 illustrated. If desired, a sealing lip incorporating the noise-reducing expanded or monocellular rubber or similar material portions could be mounted on only one side of the window glass, the sealing strip on the other side perhaps being of conventional form. In such a case, the reduction in noise might not be so great as would be achieved by the use of sealing strips with expanded or monocellular material regions on both sides of the window glass, but might be adequate for some applications.

## Claims

1. A sealing or guiding strip (26,28) for making sealing or guiding contact with a member (6) movable in a predetermined path, comprising a mounting part (30,48) for mounting the strip adjacent the said path, a sealing or guiding portion (32,54,56) made of flexible material for contacting the said member (6), and an intermediate portion (40,42,58,60) connecting the sealing or guiding portion (32,54,56) to the mounting part (30,49), **characterised in that** the intermediate portion (40,42,58,60) is made of expanded or monocellular material.

2. A strip according to claim 1, **characterised in that** the flexible material of the sealing or guiding portion (32,54,56) is non-cellular.

3. A strip according to claim 1 or 2, **characterised in that** said flexible material is plastics or rubber.

4. A strip according to any preceding claim, **characterised in that** the mounting part (30,48) is channel-shaped for gripping a mounting flange (10,12,14,16) or the like.

5. A strip according to claim 4, **characterised in that** the mounting part (30,48) comprises channel-shaped flexible material.

6. A strip according to any preceding claim, **characterised in that** the sealing or guiding portion (32,54,56) and the intermediate portion (40,42,58,60) are integrally extruded.

7. A strip according to claim 5, **characterised in that** the mounting part (30,48), the sealing or guiding portion (32,54,56) and the intermediate portion (40,42,58,60) are all integrally extruded.

8. A strip according to any preceding claim, **characterised in that** the sealing or guiding portion (32) is in the form of a wall (44) embracing a hollow interior, the intermediate portion comprising two expanded monocellular plastics or rubber portions (40,42) respectively connecting the wall (44) to the mounting part (30) at two positions spaced apart across the hollow interior.

9. A strip according to any one of claims 1 to 7, **characterised in that** the sealing or guiding portion comprises at least one sealing lip (54,56) extending away from the mounting part (48) towards the said path, the intermediate portion comprising a portion (58,60) of expanded or monocellular plastics or rubber connecting the root of the lip (54,56) to the mounting part (48).

10. A strip according to any preceding claim, **characterised by** low-friction material such as flock on a face of the sealing or guiding portion (32,54,56) contacted by the movable member (6).

11. A sealing or guiding arrangement for making sealing or guiding contact with a surface of a movable window glass (6) in a motor vehicle body door, comprising a sealing or guiding strip (26) having a mounting part (30) made of extruded flexible material (33) for mounting the strip to extend along and adjacent to one longitudinally extending edge of a waist line aperture in the door through which the window glass (6) moves, a sealing or guiding portion (32) made of flexible material having a face for making sealing or guiding contact with the surface of the window glass (6), and an intermediate portion (40,42) integrally connecting the sealing or guiding portion (32) to the mounting part (30), **characterised in that** the intermediate portion (40,42) is made of expanded or monocellular flexible material the arrangement being such as to reduce the production of any squeaking noise caused by sliding movement of the window glass (6) against the sealing or guiding portion (32) in use.

12. An arrangement according to claim 11, **characterised by** a further sealing or guiding strip (28) mounted to extend along and adjacent to the opposite longitudinally extending edge of the waist line aperture.

13. An arrangement according to claim 11 or 12, **characterised in that** the sealing or guiding portion (32) of the or at least one of the sealing or guiding strips (26,28) comprises a wall (44) made of the non-cellular material embracing a hollow interior, and the intermediate portion comprises two separate portions (40,42) of the expanded or monocellular material connecting the wall (44) to the mounting part (30) at respective portions spaced apart across the hollow interior.

14. An arrangement according to any one of claims 11 to 13, **characterised in that** the sealing or guiding portion of the or one of the sealing or guiding strips (26,28) comprises at least one lip (54,56) made of the non-cellular material, and the intermediate portion comprises a portion (58,60) of the expanded or monocellular material connecting the root of the lip (54,56) to the mounting part (48).

15. An arrangement according to any one of claims 11 to 14, **characterised in that** the mounting part (30,48) is of channel-shape for embracingly gripping a mounting flange (10,12,14,16) or the like.

16. An arrangement according to any one of claims 11 to 15, in which the flexible material (33,50) of the mounting part (30,48) and/or the flexible material of the sealing or guiding portion (32,54,56) is plastics or rubber.

17. An arrangement according to any one of claims 11 to 16, **characterised by** a reinforced carrier (34,52) embedded within the material of the mounting part (30,48).

18. An arrangement according to any one of claims 11 to 17, **characterised in that** the material of the sealing or guiding portion (32,54,56) is non-cellular.

## Patentansprüche

1. Dichtungs- oder Führungsleiste (26, 28) zum Herstellen eines Dichtungs- oder Führungskontaktes mit einem in einem vorgegebenen Weg beweglichen Element (6), mit einem Befestigungsteil (30, 48) zum Befestigen der Leiste neben dem Weg, einem Dichtungs- oder Führungsteil (32, 54, 56) aus flexiblem Material zur Herstellung eines Kontaktes mit dem Element (6) und mit einem Zwischenteil (40, 42, 58, 60), welches den Dichtungs- oder Führungsteil (32, 54, 56) mit dem Befestigungsteil (30, 49) verbindet, **dadurch gekennzeichnet, dass** den Zwischenteil (40, 42, 58, 60) aus expandiertem oder monozellulärem Material hergestellt ist.

2. Leiste nach Anspruch 1, **dadurch gekennzeichnet, dass** das flexible Material des Dichtungs- oder Führungsteils (32, 54, 56) nicht-zellulär ist.

3. Leiste nach Anspruch 1 oder 2, **dadurch gekennzeichnet, dass** das flexible Material Kunststoff oder Kautschuk ist.

4. Leiste nach einem der vorangegangenen Ansprüche, **dadurch gekennzeichnet, dass** der Befestigungsteil (30, 48) kanalförmig ist, um einen Befestigungsflansch (10, 12, 14, 16) oder dergleichen zu greifen.

5. Leiste nach Anspruch 4, **dadurch gekennzeichnet, dass** der Befestigungsteil (30, 48) ein kanalförmiges flexibles Material aufweist.

6. Leiste nach einem der vorangegangenen Ansprüche, **dadurch gekennzeichnet, dass** das der Dichtungs- oder Führungsteil (32, 54, 56) und der Zwischenteil (40, 42, 58,60) integriert extrudiert sind.

7. Leiste nach Anspruch 5, **dadurch gekennzeichnet, dass** der Befestigungsteil (30, 48) der Dichtungs- oder Führungsteil (32, 54, 56) und der Zwischenteil (40, 42, 58, 60) integriert extrudiert sind.

8. Leiste nach einem der vorangegangenen Ansprüche, **dadurch gekennzeichnet, dass** der Dichtungs- oder Führungsteil (32) die Form einer Wand (44) aufweist, die einen hohlen Innenraum umschließt, wobei der Zwischenteil zwei expandierte monozelluläre Kunststoff- bzw. Kautschukteile (40, 42) aufweist, die die Wand (44) mit dem Befestigungsteil (30) an zwei Positionen, die entlang des hohlen Innenraums von einander beabstandet sind, verbinden.

9. Leiste nach einem der Ansprüche 1 bis 7, **dadurch gekennzeichnet, dass** der Dichtungs- oder Führungsteil mindestens eine Dichtlippe (54, 56) umfasst, die sich vom Befestigungsteil (48) weg in Richtung auf den Weg zu erstreckt, wobei das Zwischenteil einen Teil (58, 60) aus expandiertem oder monozellulärem Kunststoff oder Kautschuk aufweist, der die Wurzel der Lippe (54, 56) mit dem Befestigungsteil (48) verbindet.

10. Leiste nach einem der vorangegangenen Ansprüche, **gekennzeichnet durch** ein Material mit geringer Reibung, wie einer Flocke auf einer Oberfläche des Dicht- oder Führungsteils (32, 54, 56) in Kontakt mit dem beweglichen Teil (6).

11. Dichtungs- oder Führungsanordnung zum Herstellen eines Dichtungs- oder Führungskontaktes mit einer Oberfläche eines beweglichen Fensterglases (6) in einer Kraftfahrzeugtür, welches eine Dichtungs- oder Führungsleiste (26) aufweist mit einem Befestigungsteil (30) aus extrudiertem flexiblem Material (33), um die Leiste derart zu befestigen, dass sie sich entlang und neben einer sich in Längsrichtung erstreckenden Kante mit einer Mittelöffnung in der Tür erstreckt, durch welche sich das Fensterglas (6) bewegt, einem Dichtungs- oder Führungsteil (32) aus flexiblem Material mit einer Vorderseite zum Herstellen des Dichtungs- oder Führungskontaktes mit der Oberfläche der Glasscheibe (6), und einem Zwischenteil (40, 42), welches den Dichtungs- oder Führungsteil (32) integriert mit dem Befestigungsteil (30) verbindet, **dadurch gekennzeichnet, dass** das Zwischenstück (40, 42) aus expandiertem oder monozellulärem flexiblen Material hergestellt ist, wobei die Anordnung derart ausgestaltet ist, um die Erzeugung jeglicher Quietschgeräusche zu verringern, die bei der Verwendung durch die Gleitbewegung des Fensterglases (6) gegenüber dem Dicht- oder Führungsteil (32) hervorrufen werden.

12. Anordnung nach Anspruch 11, **gekennzeichnet durch** eine weitere Dichtungs- oder Führungsleiste (28) die derart angebracht ist, dass sie sich entlang oder neben der gegenüberliegenden sich in Längsrichtung erstreckenden Kante der Mittelöffnung erstreckt.

13. Anordnung nach Anspruch 11 oder 12, **dadurch gekennzeichnet, dass** der Dichtungs- oder Führungsteil (32) von der oder von mindestens einer der Dichtungs- oder Führungsleisten (26, 28) eine Wand (44) aus nicht-zellulärem Material aufweist, welches einen hohlen Innenraum umschließt, und dass das Zwischenteil zwei separate Teile (40, 42) aus expandiertem oder monozellulärem Material aufweist, welche die Wand (44) an das Befestigungsteil (30) an entsprechenden Abschnitten, die entlang des hohlen inneren von einander beabstandet sind, befestigen.

14. Anordnung nach einem der Ansprüche 11 bis 13, **dadurch gekennzeichnet, dass** das der Dichtungs- oder Führungsteil von der oder von einer der Dichtungs- oder Führungsleisten (26, 28) mindestens eine Lippe (54, 56) aus nicht-zellulärem Material aufweist, und dass das Zwischenstück einen Teil (58, 60) des expandierten oder monozellulären Materials, welches die Basis der Lippe (54, 56) mit dem Befestigungsteil (48) verbindet, umfasst.

15. Anordnung nach einem der Ansprüche 11 bis 14, **dadurch gekennzeichnet, dass** der Befestigungsteil (30, 48) kanalförmig ist, um einen Befestigungsflansch (10, 12, 14, 16) oder dergleichen umklammernd zu greifen.

16. Anordnung nach einem der Ansprüche 11 bis 15, worin das flexible Material (33, 50) des Befestigungsteils (30, 48) und/oder das flexible Material des Dicht- oder Führungsteils (32, 54, 56) aus Kunststoff oder Kautschuk ist.

17. Anordnung nach einem der Ansprüche 11 bis 16, **gekennzeichnet durch** einen verstärkenden Träger (34, 52), welcher in das Material des Befestigungsteils (30, 48) eingebettet ist.

18. Anordnung nach einem der Ansprüche 11 bis 17, **dadurch gekennzeichnet, dass** das Material des Dicht- oder Führungsteils (32, 54, 56) nicht-zellulär ist.

## Revendications

1. Bande (26, 28) d'étanchéité ou de guidage destinée à être en contact étanche ou de guidage avec un organe (6) mobile suivant un trajet prédéterminé, comprenant une partie de montage (30, 48) destinée au montage de la bande à proximité du trajet, une partie d'étanchéité ou de guidage (32, 54, 56) formée d'un matériau flexible, destinée à être au contact dudit organe (6), et une partie intermédiaire (40, 42, 58, 60) raccordant la partie d'étanchéité ou de guidage (32, 54, 56) à la partie de montage (30, 48), **caractérisée en ce que** la partie intermédiaire (40, 42, 58, 60) est formée d'un matériau expansé ou monocellulaire.

2. Bande selon la revendication 1, **caractérisée en ce que** le matériau flexible de la partie d'étanchéité ou de guidage (32, 54, 56) n'est pas cellulaire.

3. Bande selon la revendication 1 ou 2, **caractérisé en ce que** le matériau flexible est une matière plastique ou un caoutchouc.

4. Bande selon l'une quelconque des revendications précédentes, **caractérisée en ce que** la partie de montage (30, 48) a une forme de canal destiné à retenir un flasque de montage (10, 12, 14, 16) ou analogue.

5. Bande selon la revendication 4, **caractérisée en ce que** la partie de montage (30, 48) comprend un matériau flexible en forme de canal.

6. Bande selon l'une quelconque des revendications précédentes, **caractérisée en ce que** la partie d'étanchéité ou de guidage (32, 54, 56) et la partie intermédiaire (40, 42, 58, 60) sont extrudées en une seule pièce.

7. Bande selon la revendication 5, **caractérisée en ce que** la partie de montage (30, 48), la partie d'étanchéité ou de guidage (32, 54, 56) et la partie intermédiaire (40, 42, 58, 60) sont toutes extrudées en une seule pièce.

8. Bande selon l'une quelconque des revendications précédentes, **caractérisée en ce que** la partie d'étanchéité ou de guidage (32) est sous forme d'une paroi (44) qui entoure une partie intérieure creuse, la partie intermédiaire comprenant deux parties de caoutchouc ou de matière plastique monocellulaire expansée (40, 42) raccordant respectivement la paroi (44) de la partie de montage (30) à deux positions distantes de part et d'autre de l'intérieur creux.

9. Bande selon l'une quelconque des revendications 1 à 7, **caractérisée en ce que** la partie d'étanchéité ou de guidage comporte au moins une lèvre d'étanchéité (54, 56) qui s'étend depuis la partie de montage (48) vers ledit trajet, la partie intermédiaire comprenant une partie (58, 60) de caoutchouc ou de matière plastique expansée ou monocellulaire raccordant le pied de la lèvre (54, 56) à la partie de montage (48).

10. Bande selon l'une quelconque des revendications précédentes, **caractérisée par** un matériau à faible coefficient de frottement, par exemple un flocage d'une face de la partie d'étanchéité ou de guidage (32, 54, 56) qui est au contact de l'organe mobile (6).

11. Arrangement d'étanchéité ou de guidage destiné à être en contact étanche ou de guidage avec une surface d'un vitrage mobile (6) d'une porte de carrosserie de véhicule à moteur, comprenant une bande d'étanchéité ou de guidage (26) possédant une partie de montage (30) formée d'un matériau flexible extrudé (33) et destinée au montage de la bande afin qu'elle s'étende le long d'un bord longitudinal d'un orifice de ligne de ceinture formé dans la porte et par lequel se déplace le vitrage (6) et près de ce bord, une partie d'étanchéité ou de guidage (32) formée d'un matériau flexible ayant une face destinée à être en contact étanche ou de guidage avec la surface du vitrage (6), et une partie intermédiaire (40, 42) raccordant en une seule pièce la partie d'étanchéité ou de guidage (32) à la partie de montage (30), **caractérisée en ce que** la partie intermédiaire (40, 42) est formée d'un matériau flexible expansé ou monocellulaire, la disposition étant telle que la production d'un bruit de couinement dû au mouvement de glissement du vitrage (6) contre la partie d'étanchéité ou de guidage (32) pendant l'utilisation est réduite.

12. Arrangement selon la revendication 11, **caractérisé par** une autre bande d'étanchéité ou de guidage (28) montée afin qu'elle s'étende le long du bord longitudinal opposé de l'ouverture de la ligne de ceinture et près de ce bord.

13. Arrangement selon la revendication 11 ou 12, **caractérisé en ce que** la partie d'étanchéité ou de guidage (32) de la bande ou de l'une au moins des bandes d'étanchéité ou de guidage (26, 28) comporte une paroi (44) formée d'un matériau non cellulaire qui entoure une partie intérieure creuse, et la partie intermédiaire comporte deux parties séparées (40, 42) du matériau expansé ou monocellulaire raccordant la paroi (44) à la partie de montage (30) à des portions respectives espacées de part et d'autre de la partie intérieure creuse.

14. Arrangement selon l'une quelconque des revendications 11 à 13, **caractérisé en ce que** la partie d'étanchéité ou de guidage de la bande ou de l'une des bandes d'étanchéité ou de guidage (26, 28) comporte au moins une lèvre (54, 56) formée d'un matériau non cellulaire, et la partie intermédiaire comprend une partie (58, 60) de matériau expansé ou monocellulaire qui raccorde le pied de la lèvre (54, 56) à la partie de montage (48).

15. Arrangement selon l'une quelconque des revendications 11 à 14, **caractérisé en ce que** la partie de montage (30, 48) a une forme de canal destinée à retenir en l'entourant un flasque de montage (10, 12, 14, 16) ou analogue.

16. Arrangement selon l'une quelconque des revendications 11 à 15, dans lequel le matériau flexible (33, 50) de la partie de montage (30, 48) et/ou le matériau flexible de la partie d'étanchéité ou de guidage (32, 54, 56) est formé de caoutchouc ou de matière plastique.

17. Arrangement selon l'une quelconque des revendications 11 à 16, **caractérisé par** un support renforcé (34, 52) enrobé dans le matériau de la partie de montage (30, 48).

18. Arrangement selon l'une quelconque des revendications 11 à 17, **caractérisé en ce que** le matériau de la partie d'étanchéité ou de guidage (32, 54, 56) n'est pas cellulaire.
